# EUROPEAN PATENT APPLICATION

(11) **EP 1 152 325 A1**
(43) Date of publication of application: **07.11.2001**
(21) Application number: 01201468.4
(22) Date of filing: 23.04.2001
(51) Int. Cl.: G06F 3/12

(54) **Stepped user alerts in a networked printer system**

(30) Priority: 04.05.2000 EP 00201601
(71) Applicant: Océ-Technologies B.V., 5914 CC Venlo (NL)
(72) Inventor: Geelen, Johannes Franciscus Maria Elisabeth, 5991 AV Baarlo (NL); van Buren, Antonius Cornelius Maria, 5941 JK Velden (NL); Thijssen, Henk Peter Gerard, 5913 XX Venlo (NL); De Jong, Frederik, 5906 MP Weert (NL); Teeuwen, Peter Johannes Hendrikus Maria, 5993 BC Maasbree (NL)
(74) Representative: van Meeteren, Arend Anthonie

(57) **Abstract**

A method of operating a printing system comprising at least one printer (PR) and at least two user terminals (WS) connected to the at least one printer through a network (N), each said printer having a control unit (14) which receives print jobs from the user terminals and controls processing of these print jobs,
the method comprising, upon a disturbance of said processing of a print job,
sending a warning message relating to said disturbance to at least one of the user terminals,
characterized in that said method further comprises,
upon a disturbance of a predetermined kind,
generating an alerting signal relating to said disturbance at a predetermined first one of said user terminals (WS),
waiting for a response, and, if no response is detected within a predetermined delay time,
generating an alerting signal relating to said same disturbance at a predetermined other one of the user terminals (WS).

## Description

The invention relates to a method of operating a printing system comprising at least one printer and at least two user terminals connected to the at least one printer through a network, each said printer having a control unit which receives print jobs from the user terminals and controls processing of these print jobs, the method comprising, upon a disturbance of said processing of a print job, sending a warning message to at least one of the user terminals.

The invention is also directed to a printing system in which the method according to the invention is implemented.

As is well known in the art, a printer, which may also be a digital copier having a print function, has a control panel equipped with a display on which messages can be presented to the user. For instance, if the paper tray of the printer is empty, then a tray empty warning such as "paper tray empty" is output on the display, in order to cause the user to refill the paper tray with the recording sheets needed for processing or completing the print job. Frequently, such a printer is connected to a number of workstations through a network, so that print jobs can also be sent to the printer from the various workstations. The term "user terminal" as used herein, refers to the workstations of users.

The printing software installed on the workstation may include a print monitor function which is capable of receiving messages from the printer and displaying these messages on the screen of the workstation in order to inform the user of the status of the print job or jobs and, in particular, in order to alert the user if the printer needs attention, e.g. if the paper tray of the printer needs to be refilled. An example of a known system including a print monitor function is described in applicant's European patent application no. 0 943 985.

However, if the print monitor function is not activated or if the user does not respond to such an alert, then the print processing in the printer is interrupted. This is a particular disadvantage in a multi-user system in which the printer may receive print jobs from several workstations, because the delay in the processing of the print job will then also affect all the other users whose print jobs are waiting in the print queue.

For instance, in the example given, the printer has a plurality of paper trays accommodating recording sheets of different types, then the control unit of the printer will select the pertinent tray in accordance with the type of recording sheet that has been specified by the user in the printing instructions. Then, when the printing process is interrupted because lack of paper, a subsequent job in the print queue cannot be processed until the paper tray has been refilled, although the kind of sheet specified for the subsequent job may be available in the printer.

In a multi-user system, it is therefore convenient to appoint a key operator, normally a user who is particularly in charge of waiting the printer, performing simple maintenance activities and removing simple disturbances of the printing process, i.e. all kinds of services that do not require help from a service engineer.

However, if a conventional print monitoring system is installed, the remote user at the workstation and the key operator will receive a disturbance alert essentially simultaneously. As a result, the remote user at the workstation will be caused to leave the workstation in order to refill the paper tray, but when he gets to the printer, he finds that the tray has already been refilled by the key operator.

It is an object of the invention of the invention to provide a method of operating a printing system which permits to service the printers more efficiently in case of small disturbances of the printing process.

This object is achieved with the features indicated in claim 1.

The method of the invention is thus characterized in that it further comprises, upon a disturbance of a predetermined kind, generating an alerting signal at a predetermined first one of said user terminals, waiting for a response, and, if no response is detected within a predetermined delay time, generating an alerting signal at a predetermined other one of the user.

Thus, if the first one of the user terminals is a workstation of a user and said other terminal is that of the key operator, then the key operator will be called only if the user has failed to remove the disturbance within the delay time. As a result, it is assured that only either the user or the operator is caused to take action, but not both of them. Conversely, the system may be so configured that the first message is sent to the key operator, i.e. the workstation of the person appointed as key operator, and the delayed second message is sent to the user, if the operator has failed to take action. In any case, the likelihood that the interruption of the print processing persists because nobody removes the disturbance, is reduced significantly.

Useful optional features of the invention are specified in the dependent claims. Preferably, the first alert, and preferably also the second alert, if any, is forcibly displayed on the terminal screen, or at least an acoustic or optical signal alerting the user and the operator, respectively, of the occurrence of the message, is forcibly output through the terminal, regardless of whether or not a print monitor function has been activated in the terminal. Also, the messages may be generated by a print monitor function that is automatically activated upon submission of a print job.

Still referring to the example given of a disturbance caused by the recording sheets trays becoming empty, if the printer has a plurality of paper trays accommodating different kinds of recording sheets, it is preferable that each of the first and second messages identifies the type of the recording sheets to be inserted as well as the tray where to place them. As a result, the control unit of the printer can keep track of the contents of all the paper trays without any need for the user or operator to input specific information on the type of sheet, e.g. the size, material or color of the sheets or the like. In this case, the messages may be sent not only when a tray is empty but also in the case that the sheets available in the various trays are not of the kind that is needed for the job to be processed. The messages will then cause the user or the key operator to remove the sheets that are not needed from one of the trays and to replace them by the sheets required for the print job. If a plurality of print jobs are scheduled in the print queue, the messages pertaining to a job that is still waiting in the print queue may be sent already while the printer is still busy with processing one or more other jobs, so that the necessary recording sheets can be provided before the processing of the job begins, and the operation of the printer needs not be interrupted.

Likewise, if the printer is equipped with sensors for detecting or at least roughly estimating the number of recording sheets still present in the various trays, the messages may be sent as soon as it is detected that the available number of sheets will not be sufficient for completing the print job.

In these cases, the delay time between the first and second messages may be dynamically varied dependent on the time period that is left before the processing of the job begins and/or the stock of paper in the tray is consumed.

The response of the user or operator confirming that the required sheets have been inserted may consist of the depression of the print button. Since the trays of a printer are normally equipped with detectors detecting the presence or absence of recording sheets, it is also possible in a modified embodiment of the invention to use the signals from these detectors for generating the confirmation signal. If the selected tray was empty, the signal indicating the presence of recording sheets will be taken as the confirmation signal, and if the tray was loaded with sheets of the wrong type, the confirmation signal will consist of a signal indicating the absence of sheets in that tray (removal of the wrong sheets), followed by a signal indicating again the presence of sheets in that tray.

Preferred embodiments of the invention will be described below in conjunction with the accompanying drawings, in which
- Fig. 1: is a block diagram of a printing system to which the invention is applicable;
- Fig. 2: is a block diagram of one of the printers in the printing system shown in Figure 1;
- Fig. 3: is a flow chart illustrating a function of the printing system in accordance with the invention;
- Fig. 4: is a dialog to be presented to a user of the printing system;
- Fig. 5: is a dialog to be presented to the key operator of a printer;
- Fig. 6: is a dialog to be presented to a user on the local printer terminal;
- Fig. 7: is a flow chart illustrating a function of the printing system in accordance with an alternative embodiment of the invention; and
- Fig. 8: is a flow chart illustrating an additional aspect of the system.

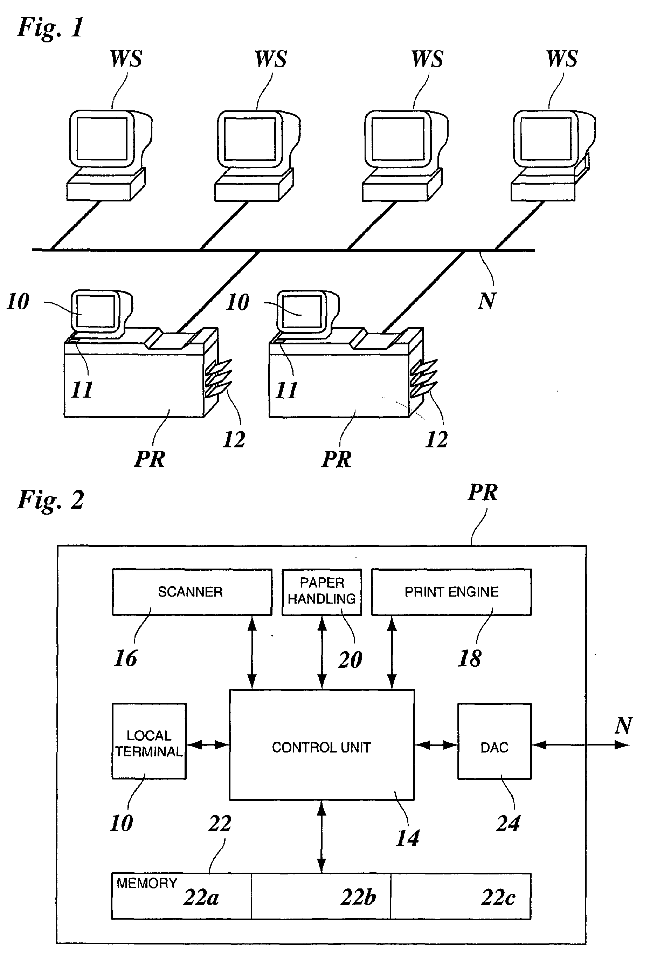

Figure 1 shows a system of workstations WS and printers PR connected by a local network N. The workstations are, for example, PC's and are in each case equipped with a processing unit, a screen, a keyboard and a mouse. The printers are digital copying machines each comprising a scanner, a print engine, a local terminal and a connection unit (digital access controller or DAC) for connection to the network and processing print jobs sent from the workstations. In addition, it is possible to use machines which only have a printer function. All these machines, copying machines and printers, are hereinafter referred to as "printer". Users wishing to have a specific data file printed from their workstation, can for the purpose choose from a number of, or even all, the printers of the system.

In the example shown, each printer has as an operating console or local terminal 10, a print button 11 and three trays 12 which may be loaded with recording sheets of various kinds. The trays 12 are arranged one above the other and are e.g. numbered from top to bottom, so that the uppermost tray of each printer is designated as tray number No. 1, the middle tray is designated as tray No. 2 and the lowermost tray is designated as tray No. 3.

As is shown in figure 2, each printer PR has an electronic control unit 14 which may be formed by a digital computer loaded with software for controlling all the functions of the printer. More particularly, the control unit 14 controls the operation of the scanner 16, the print engine 18 and a paper handling system 20 which feeds the recording sheets from a selected one of the trays 12 through the printer and further to a discharge tray (not shown). The control unit 14 further communicates with the local terminal 10 of the printer, a memory 22 and, through the DAC 24, with the workstations WS and the other printers connected to the network N.

The memory 22 has a number of memory locations 22a, 22b, 22c corresponding to the number of trays 12 provided in the printer. Each of these memory locations stores information on the type of recording sheet that has been loaded in the associated tray 12. This information comprises for example the size of the sheets, the material (e.g. paper or transparent film), the color, the paper weight and other relevant characteristics of the sheet, so that the type of sheet is uniquely defined by the information stored in the respective memory location. Some of these characteristics, for example, the size, may be automatically detected by detectors arranged in the trays 12, as is generally known in the art, whereas other characteristics can be input by a user or operator through the local terminal 10. The memory 22 is a non-volatile memory, so that the information will not be lost when the power supply to the printer is interrupted.

The print engine 18 may be include a conventional electrophotographic print process, in which a photoconducting medium is first charged, then exposed imagewise using a laser or LED-bar and then developed with toner powder. The toner image that is thus formed in the medium is tranferred to a recording sheet and fixed thereon by heat. Such electrophotographic systems are well-known in the art and therefore a more detailed description is considered superfluous.

When a user wants to print a data file from one of the workstations WS, he selects one of the printers PR for executing the print job and sends the print job to this printer through the network N. The data of the print job are then received by the DAC 24 of the selected printer and are forwarded to the control unit 14 of that printer. These data include printing instructions specifying printing parameters such as the number of copies and, among others, the type or types of recording sheet on which the data are to be printed.

In a copy mode, the data to be printed are scanned-in with the scanner 16, and the associated printing instructions are input through the local terminal 10 of the printer. The print job thus created will normally be processed by the print engine 18 of the same printer PR, but may optionally also be transmitted to another printer.

When a print job is input to the printer PR either through the local scanner 16 or through the network N, while this printer is still busy with another job, a scheduling software implemented in the control unit 14 schedules the print jobs, i.e. arranges the print jobs in a printing queue. For example, the sequence of the jobs in the print queue may correspond to the sequence in which the jobs have been input. Optionally, this sequence may be altered depending on different priorities assigned to the various jobs. It may be assumed that a key operator is appointed for each of the printers PR. This operator is a user who is particularly in charge of this specific printer in order to, for example, remove paper jams and load the required recording sheets into the trays 12. This key operator may also have authority to alter the printing queue by overriding the automatic scheduling process. For example, the key operator may be authorized to interrupt a running job in order to execute another job with higher priority in-between. The key operator may have access to the printer through the local terminal 10 of the printer or through one of the workstations WS which, for convenience, should be located not too far away from the printer. In the latter case, the network address of the operator's workstation is set in the control unit 14 of the printer, so that messages addressed to the operator can be sent to the correct location.

The software for controlling communication with the operator and with the other users through the local terminal 10 and/or through the network is implemented in the control unit 14. This software, together with the local terminal and the workstations, forms the user interface of the printing system.

The control units 14 of the various printers PR may also be configured to communicate with each other, so that the control system of the complete system shown in figure 1 is formed by the co-operating control units of the various printers.

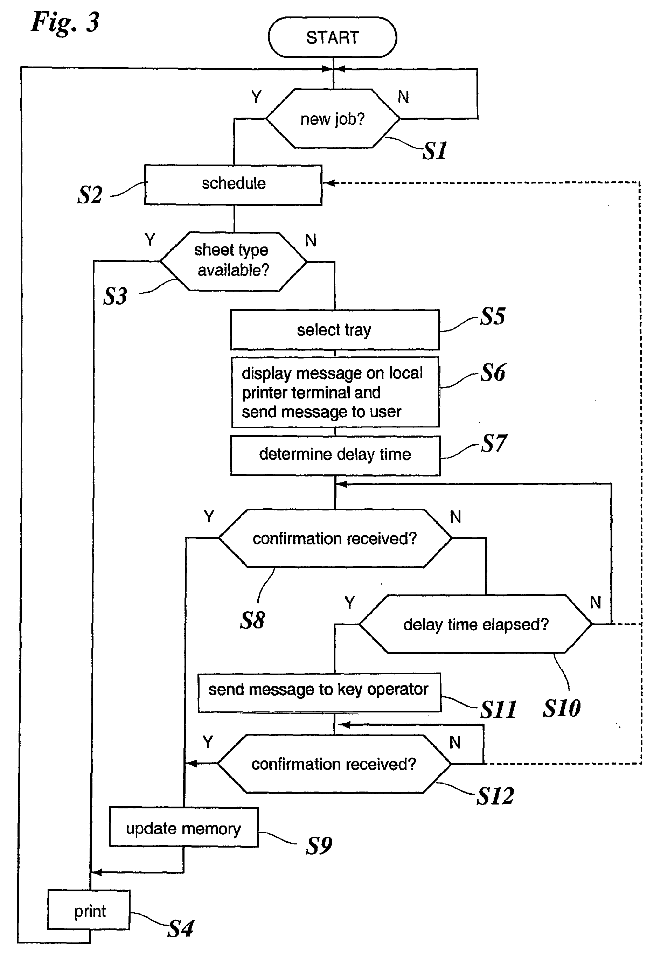

Figure 3 illustrates a high level control program which is executed by the control unit 14 and which calls up the functions of the user interface as well as the software components controlling the physical functions of the printer.

For simplicity, the control program shown in Fig. 3 is limited to the aspect of recording sheet management in the printer control program and, in particular, to the steps taken in case the type of sheets required for a print job are not available. In that case, the print process is stopped automatically and an operator must remove the disturbance by filling the required copy sheets into one of the paper trays 12. It should, however, be understood that the present invention covers all kinds of disturbances of the print process, that can be removed by a normal operator. Such disturbances include, for instance, non-availability of staples when the print job specification requires stapling, or a paper jam in the print engine. Also, the output tray of the printer may become full, in which case the print process is stopped automatically. The modifications to the flow sheet of Fig. 3 are obvious and are therefore considered well within the capabilities of the skilled person.

In step S1, which is cyclically repeated in a waiting loop, the control unit checks whether a new job has been entered. When a new job is received, the program branches to a scheduling step S2 where the new job is added to the print queue. Of course, if the printer was idling, the scheduling step S2 is trivial, and the new job can be processed immediately.

In a subsequent step S3, the control unit checks the printing instructions of the new job in order to identify the type or types of recording sheet that are needed for this job, and by comparing this type or these types with the types presently stored in the memory 22, it is decided whether or not the necessary sheet types are available. If all the sheet types needed are already loaded in the trays 12, the processing of the new job can readily be started in step S4, as soon as the jobs preceding in the print queue have been completed.

If, however, at least one necessary sheet type is not available, the program branches to step S5, where the program automatically selects one of the trays 12 for accommodating the sheets that have to be loaded. If only one of the trays 12 is empty, the empty tray will be selected. If two trays are empty, the higher one of the trays, i.e. the tray with the lower number will be selected. If no tray is empty, the program at first identifies the trays which accommodate sheets that are needed for anyone of the print jobs that have been scheduled. If there is at least one tray including sheets that are not needed, the highest one of the these trays is selected. If the sheets in all three trays are still needed, the selection has to be postponed until the print queue has been processed to such an extent that the sheets in one of the trays are not needed any longer. Then, this tray will be selected.

There may also occur a situation in which the job for which the step S3 has been executed is not the last job in the print queue. This may happen for example if the processing of a job has been interrupted in order to process another job in-between. Then, it may also be checked, which trays will be needed for the subsequent jobs, in order to reduce the number of reloading processes to minimum.

Once a specific tray has been selected in step S5, a message indicating this tray and the type of sheet to be loaded thereinto is sent to the user in step S6. If the print job has been scanned-in at the printer, this message will be sent to, and displayed on, the local terminal 10 of the printer only. If the print job has been entered from a workstation, as will be assumed here, then the message is sent to both this workstation and the local printer terminal 10. If there are no jobs preceding the present job in the print queue or if all preceding jobs have been completed, the control unit will stop the printer.

In step S7, a delay time is determined. This delay time corresponds to the time which is given to the user for making his way to the printer and loading the required sheets into the specified tray.

Then, it is checked in step S8 whether the required action has been completed and confirmed, by restarting the printer, i.e., by pressing the print button 11 on the print engine. If such confirmation has been received, it can be assumed that the selected tray now contains the type of sheet that has been specified in the message, and, in step S9, the characteristics identifying this type of sheet are stored in the corresponding location of the memory 22 so as to update the memory. In this way, the control unit always keeps track of any changes of the contents of the trays 12, so that the information stored in the memory 22 will always represent the actual status of the trays, without any need for the user to input the characteristics of the sheets that have been loaded.

From step S9, the program proceeds to step S4 for processing the print job in accordance with the print queue.

When it is found in step S8 that the user has not yet restarted the printer, it is checked in step S10 whether the delay time determined in step S7 has elapsed. If the delay time has not yet elapsed, the program loops back to step S8, so that the check in step S8 is repeated. If the delay time has elapsed, e.g. because the workstation user has not received the message or is not willing to respond thereto, then, in order to limit the time for which the job processing is interrupted, a message identifying the selected tray and the necessary type of recording sheet is sent to the key operator in step S11. Then, it is checked in step S12 whether the key operator has completed the required action and has confirmed this by restarting the printer. If this is the case, the program proceeds with steps S9 and S4. Otherwise, this step S12 is repeated, until a positive result is obtained.

Alternatively, when neither the user nor the key operator respond, the current print job may be postponed and rescheduled, so that the next print job in the queue may be processed first.

Of course, the steps S6 to S10 may be skipped, e.g. if the job has been sent from the local terminal or the workstation that is assigned to the key operator himself.

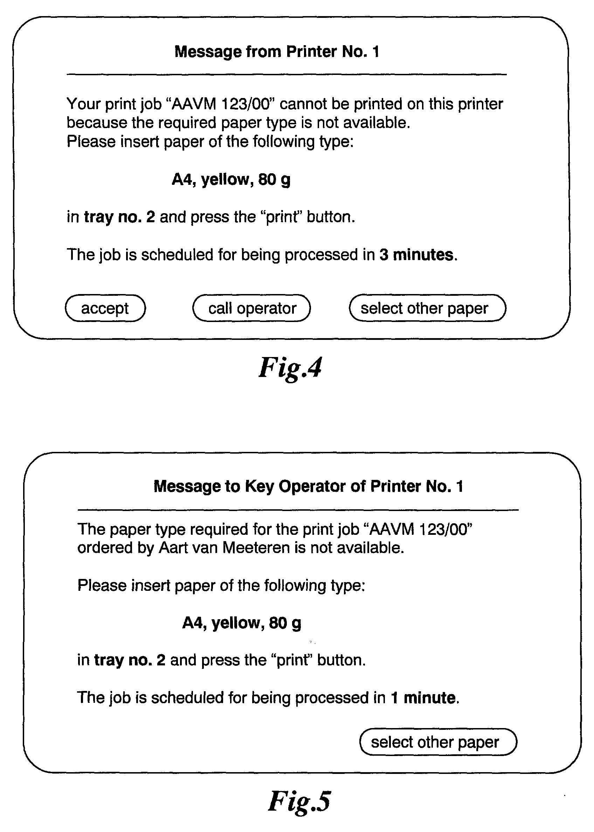

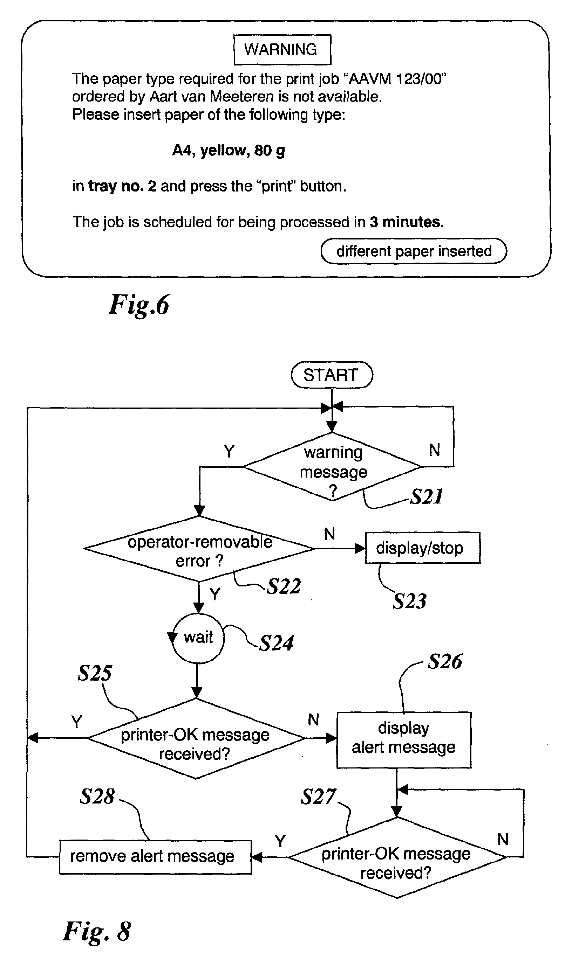

The message sent to the user in step S6 may be in the form of a dialog an example of which is shown in figure 4. Preferably, this dialog is displayed forcibly on the monitor screen of the user workstation, or the user is forcibly alerted of this message by an acoustic signal and/or a blinking icon or the like, regardless of whether or not the user has activated a print monitor function. Alternatively, the alert may be part of a print monitor function that is automatically activated upon submission of a print job to the printer. The message sent to the key operator may have substantially the same appearance. An example of this message is shown in figure 5. The message displayed on the local printer terminal 10 is shown in figure 6.

The dialog shown in figure 4 identifies, in the headline, the printer from which the message has been sent. It further identifies the job to which the message refers. In the example shown, the sheet type is identified by the size (A4), the color (yellow) and the paper weight (80g) of the recording sheets to be loaded.

As can be seen, the message invites the user to insert recording sheets of the specified type in the selected tray (tray No. 2) and to press the "print" button. The "print" button refers to the print button 11 of the printer. A physical depression of the print button 11 will have the effect that the program shown in figure 3 proceeds from step S8 to step S9.

The example of a dialog shown in figure 4 includes some additional functionality.

If the job is not ready to be processed immediately, because preceding jobs in the print queue still have to be processed, the dialog indicates the scheduled processing time for the job, so that the user knows how much time is left for replacing the sheets.

An "accept" button in the dialog enables the user to signal to the control unit of the printer that he has received the message and is willing to respond thereto. This may optionally cause the control unit of the printer to extend the delay time that had originally been determined in step S7, so that the key operator will not be called unnecessarily. If it is not possible for the user to respond to the message himself, he may click the button "call key operator" which has the effect that step S11 in figure 3 is executed immediately, without waiting for the lapse of the delay time.

Another option offered in the dialog is to select another type of recording sheet for the print job. A mouse click on the corresponding button will open another dialog informing the user of the types of recording sheet presently available in the printer and offering him a possibility to select among these sheets.

The message to the key operator shown in figure 5 has essentially the same contents as the message shown in figure 4, but also indicates the user who has ordered the print job.

In the message on the local printer terminal 10, shown in figure 6, there is also a soft button for specifying that a paper type other than the request by the machine is inserted. If, in the example shown, yellow 80g-paper in the format A4 is not available for the operator, then the message cannot be complied with. Possibly, A4 paper with a slightly different weight or color, e.g. pink, is available and could be inserted into the selected tray, so that the user specifications could be fulfilled with only minor modifications. However, since the control unit 14 assumes that yellow 80g-paper is loaded, the change in the type of paper must be notified to the control unit so as to correct the contents of the memory 22. This is achieved by pressing said soft button on the local terminal 10, which opens a dialog prompting the operator to enter the characteristics of the sheets that are actually loaded. Only in this exceptional case is it necessary for the operator to change the contents of the memory 22 manually.

The description given above considers only the case that the lack of the correct recording sheets is detected in step S3, i.e., at a time before the processing of the job has started. It will be understood however that the sequence of steps S5 to S12, S9 and S4 can also be called up when the processing of the job has started already but is interrupted because the pertinent tray has run empty. Then messages analogous to those shown in Fig. 4 and 5 will be issued, inviting the user and possibly the key operator to refill the empty tray.

Provided that the printer is equipped with sensors detecting or at least roughly estimating the number of sheets present in each tray, such messages may also be issued in advance, if the stock of sheets in the pertinent tray is not sufficient for completing the job.

The system described above may further be modified or extended in various ways.

For example, a scheme for determining the delay time in step S7 may be configured by the key operator and/or by the user in order to fit the specific conditions of the system environment and the habits of the users. The delay time may also be varied dynamically, depending on, for example, the time left until the print job is scheduled for printing.

Further, it is possible to modify the system such that a message is sent to the key operator first and is only sent to the user, if the key operator has not responded within the specified delay time.

As another possible modification, already mentioned hereinbefore, the flow diagram shown in figure 3 may be changed in that the program loops back to the scheduling step S2 if the check in step S10 or S12 has had a negative result, as is symbolized by broken lines in figure 3. Thus, if the user and/or the key operator has failed to respond to the message in time, the job in question would be rescheduled and would, for example, be placed at the end of the print queue, so that more time is available for supplying the necessary sheets, and the processing of other jobs, for which the sheets are available already, will not be delayed.

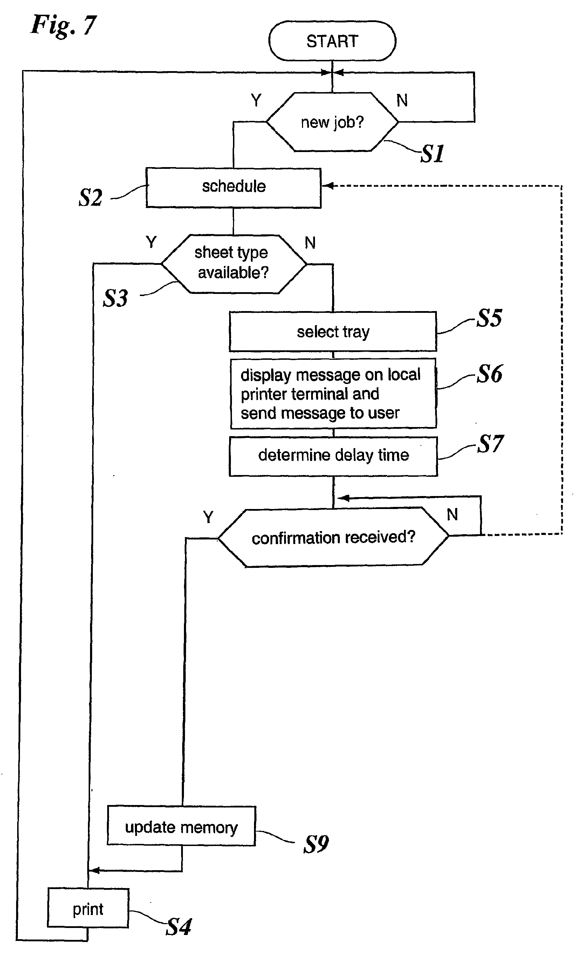

In another embodiment, the steps S10 and S11 are not performed by the printer control unit 14, but by the workstation of the key operator. In this embodiment, which is shown in figure 7, the control unit 14 sends only one message, to the workstation from which the particular print job was submitted and to the workstation of the key operator simultaneously.

The workstation of the user shows a related alerting message, shown in figure 4, immediately in its screen. However, the workstation of the key operator does not immediately display the message of figure 5, but follows a program as shown in figure 8. According to this program, when a message from the printer arrives (S21), the workstation of the key operator first checks whether the message refers to an operator-removable error (S22). If it is not, the workstation displays the error immediately (S23), and if it is, it waits for a predetermined time interval (S24). If during that time interval, the printer has sent a message to the key operator workstation, that the requested copy sheets are loaded into the specified engine tray (or, more generally, the disturbance has been removed or at least is being looked after) (S25), then the workstation of the key operator cancels the display of the warning message of figure 5, such that the key operator is not disturbed in his work, and goes back to step S21. If such a message does not arrive during the waiting time interval, the message of figure 5 is displayed (S26), so that the key operator may take action in order to remove the disturbance of the print process. The message is eventually removed from the screen of the workstation upon a message that the printer is running again (S27, S28) and the program returns to step S21.

It should be understood that the above explanation of the present invention is only an example. The skilled person will understand that other embodiments are also possible within the scope of the appended claims. These embodiments are considered to be equally protected by the patent.

## Claims

1. A method of operating a printing system comprising at least one printer (PR) and at least two user terminals (WS) connected to the at least one printer through a network (N), each said printer having a control unit (14) which receives print jobs from the user terminals and controls processing of these print jobs,
the method comprising, upon a disturbance of said processing of a print job,
sending a warning message relating to said disturbance to at least one of the user terminals,
**characterized in that** said method further comprises,
upon a disturbance of a predetermined kind,
generating an alerting signal relating to said disturbance at a predetermined first one of said user terminals (WS),
waiting for a response, and, if no response is detected within a predetermined delay time,
generating an alerting signal relating to said same disturbance at a predetermined other one of the user terminals (WS).

2. Method according to claim 1,
**characterized by**
sending a first warning message relating to said disturbance to said first one of the user terminals (WS) for generating said alerting signal,
and, if no response is received by the printer control unit (14) within a predetermined delay time,
sending a second warning message relating to said same disturbance to said other one of the user terminals (WS) for generating said alerting signal.

3. A method according to claim 2, wherein upon reception of said first message, a user terminal generates a first acoustic or optical signal for alerting the user and upon reception of said second message, a user terminal generates a second acoustic or optical signal for alerting the user.

4. A method according to claim 1,
**characterized by**
checking, in a user terminal, if a said warning message relates to a disturbance of a predetermined kind and, if so,
substantially at once generating a first signal for alerting the user in said first one of the user terminals, and
generating a second signal for alerting the user in said other one of the user terminals after a predetermined time interval.

5. A method according to claim 1,
wherein said first one of the user terminals (WS) is a user terminal having submitted a print job in which said disturbance occurred.

6. A method according to claim 1,
wherein said other one of the user terminals (WS) is a user terminal of a key operator.

7. A method according to claim 2 or 4, further comprising
checking if said disturbance is being or has been looked after, and, if so,
not generating said second signal for alerting the user.

8. A method according to claim 3 or 4, wherein said optical signal for alerting the user comprises a message (Fig. 4, Fig. 5) on the display screen of the pertinent user terminal.

9. A method according to claim 1, wherein said predetermined
kind of disturbance comprises a disturbance that can be removed by an operator.

10. A method according to claim 1, wherein said predetermined
kind of disturbance comprises non-availability of recording sheets needed for processing a print job.

11. A method according to claim 1, wherein said predetermined
kind of disturbance comprises non-availability of staples needed for processing a print job.

12. A method according to claim 1, wherein said predetermined
kind of disturbance comprises a paper jam during processing a print job.

13. A method according to claim 1, wherein said predetermined
kind of disturbance comprises "copy output full".

14. A method according to claim 7, wherein the response or detection inhibiting the second warning signal consists of the detection that a confirmation signal for signalling the removal of the disturbance has been input at the printer.

15. Printing system comprising at least one printer (PR) and at least two user terminals (WS) connected to the at least one printer through a network (N), wherein each printer has a control unit (14) which receives print jobs from the user terminals and controls the processing of these print jobs,
wherein the control unit (14), upon a disturbance of said processing of a print job, sends a warning message relating to said disturbance to at least one of the user terminals (WS),
**characterized in that**
upon a disturbance of a predetermined kind, said control unit (14) sends a first warning message relating to said disturbance to a predetermined first one of the user terminals (WS) and,
if no response is received within a predetermined delay time, sends a second warning message relating to said same disturbance to a predetermined other one of the user terminals (WS).

16. Printing system according to claim 15, wherein upon reception of said first message, a user terminal (WS) generates a first acoustic or optical signal for alerting the user and upon reception of said second message, a user terminal (WS) generates a second acoustic or optical signal for alerting the user.

17. Printing system comprising at least one printer (PR) and at least two user terminals (WS) connected to the at least one printer through a network (N), wherein each printer has a control unit (14) which receives print jobs from the user terminals and controls the processing of these print jobs,
wherein the control unit (14), upon a disturbance of said processing of a print job, sends a warning message relating to said disturbance to at least one of the user terminals,
**characterized in that**
a user terminal includes
means for checking if a said warning message relates to a disturbance of a predetermined kind and
means for generating an acoustic or optical signal for alerting the user, and **in that** upon reception of a warning message of said predetermined kind,
a predetermined first one of said user terminals (WS) substantially at once generates a first signal relating to said disturbance for alerting the user, and
a predetermined other one of said user terminals (WS) generates a second signal relating to said same disturbance for alerting the user after a predetermined time interval.

18. Printing system according to claim 16 or 17, wherein said predetermined other user terminal is provided with means for detecting a status of said printer and, upon detection that said disturbance is being or has been looked after, does not generate said second signal for alerting the user.

19. A method according to claim 15 or 17,
wherein said first one of the user terminals (WS) is a user terminal having submitted a print job in which said disturbance occurred.

20. A method according to claim 15 or 17,
wherein said other one of the user terminals (WS) is a user terminal of a key operator.

21. Printing system according to claim 16 or 17, wherein said optical signal for alerting the user comprises a message (Fig. 4, Fig. 5) on the display screen of the pertinent user terminal.

22. Printing system according to claim 15 or 17, wherein said predetermined kind of disturbance comprises a disturbance that can be removed by an operator.

23. Printing system according to claim 15 or 17, wherein said predetermined kind of disturbance comprises non-availability of recording sheets needed for processing a print job.

24. Printing system according to claim 15 or 17, wherein said predetermined kind of disturbance comprises non-availability of staples needed for processing a print job.

25. Printing system according to claim 15 or 17, wherein said predetermined kind of disturbance comprises a paper jam during processing a print job.

26. Printing system according to claim 15 or 17, wherein said predetermined kind of disturbance comprises "copy output full".

27. Printing system according to claim 18, wherein the response or detection inhibiting the second warning signal consists of the detection that a confirmation signal for signalling the removal of the disturbance has been input at the printer.
